# EUROPÄISCHE PATENTSCHRIFT

(11) **EP 4 074 554 B1**
(45) Veröffentlichungstag und Bekanntmachung des Hinweises auf die Patenterteilung: **02.07.2025**
(21) Anmeldenummer: 22164637.5
(22) Anmeldetag: 28.03.2022
(51) Int. Cl.: B60R 16/023

(54) **ANSCHLUSSVORRICHTUNG FÜR EINEN HOCHVOLT-GLEICHSPANNUNGSVERBRAUCHER, ENERGIEVERSORGUNGSEINRICHTUNG UND ELEKTRISCHE ANTRIEBSACHSE**
CONNECTION DEVICE FOR A HIGH-VOLTAGE DIRECT CURRENT POWER CONSUMER, POWER SUPPLY DEVICE AND ELECTRIC DRIVING AXLE
DISPOSITIF DE CONNEXION POUR UN CONSOMMATEUR À TENSION CONTINUE HAUTE TENSION, DISPOSITIF D'ALIMENTATION EN ÉNERGIE ET ESSIEU MOTEUR ÉLECTRIQUE

(30) Priorität: 15.04.2021 DE 102021203717
(43) Veröffentlichungstag der Anmeldung: 19.10.2022
(73) Patentinhaber: Robert Bosch GmbH, 70442 Stuttgart (DE)
(72) Erfinder: Katlan, Gergo Jozsef, 1115 Budapest (HU); Kovacs, Gabor, 3922 Taktaharkany (HU)

(56) Entgegenhaltungen:
- EP-A1- 3 236 724
- WO-A1-2020/193466
- DE-A1- 102014 014 925
- DE-A1- 102016 223 166
- DE-A1- 102017 128 310

## Beschreibung

Die vorliegende Erfindung betrifft eine elektrische Antriebsachse.

### Stand der Technik

Ganz oder zumindest teilweise elektrisch angetriebene Fahrzeuge verfügen über ein elektrisches Antriebssystem, welches von einem elektrischen Energiespeicher, wie zum Beispiel einer Traktionsbatterie, gespeist werden kann. Eine solche Traktionsbatterie kann beispielsweise eine elektrische Gleichspannung von mehreren Hundert Volt bereitstellen. Diese elektrische Spannung kann an einem elektrischen Antriebssystem bereitgestellt werden, um das Fahrzeug anzutreiben. Darüber hinaus können gegebenenfalls auch weitere zusätzliche elektrische Verbraucher von der Traktionsbatterie mit elektrischer Energie versorgt werden. Bei der Konzeption der Spannungsversorgung sind dabei auch geeignete Schutzmaßnahmen, wie zum Beispiel Überstromsicherungen und ähnliches, vorzusehen. Diese Schutzvorrichtungen müssen, beispielsweise zu Wartungs- und Servicezwecken, gut zugänglich sein.

Die Druckschrift DE 10 2014 014 925 A1 beschreibt einen Hochvoltverteiler für ein Hybrid- oder Elektrofahrzeug. Der Hochvoltverteiler umfasst eine Leiteranordnung zur Strom- und Spannungsverteilung mit mehreren Hochvolt-Abgängen und einem Hochvolt-Absicherungselement.

Elektrische Antriebsachsen sind ferner auch in der WO 2020/193 466 A1 und in der DE 10 2017 128 310 A1 offenbart.

### Offenbarung der Erfindung

Demgemäß ist eine elektrische Antriebsachse mit den Merkmalen des Anspruchs 1 vorgesehen.

### Vorteile der Erfindung

Der vorliegenden Erfindung liegt die Erkenntnis zugrunde, dass bei einem Anschluss elektrischer Verbraucher an ein Energieversorgungsnetz in der Regel Schutzvorrichtungen, wie beispielsweise ein Überstromschutz vorzusehen, sind. Derartige Schutzvorkehrungen sind insbesondere auch beim Anschluss von Hochvolt-Gleichspannungsverbrauchern an ein Hochvolt-Bordnetz eines Elektrofahrzeuges vorzusehen. Der vorliegenden Erfindung liegt ferner die Erkenntnis zugrunde, dass für derartige Schutzvorrichtungen in der Regel ein separates Gehäuse vorgesehen ist und/oder die Schutzvorrichtungen gegebenenfalls nur sehr schwer zugänglich sind.

Es ist daher eine Idee der vorliegenden Erfindung, einen Anschluss für Hochvolt-Gleichspannungsverbraucher vorzusehen, bei welchem elektrische Schutzelemente, wie zum Beispiel Überstromsicherungen, effizient in bereits vorhandene Strukturen integriert werden können. Darüber hinaus ermöglicht die erfindungsgemäße Anordnung einen einfachen und sicheren Zugang zu den erforderlichen Schutzvorrichtungen. Auf diese Weise ist ein einfacher und sicherer Service, wie beispielsweise eine Kontrolle oder ein Austausch der Sicherungselemente möglich.

Die Anschlussvorrichtung gemäß der vorliegenden Erfindung ermöglicht es dabei einerseits, Schutzelement, wie zum Beispiel Überstromsicherungen, sicher in ein bestehendes Gehäuse zu integrieren und dabei gleichzeitig mittels dieser Anschlussvorrichtung einen Hochvolt-Gleichspannungsanschluss für externe Verbraucher vorzusehen. Hierzu ist an einer Befestigungsplatte der Anschlussvorrichtung auf einer Seite der Befestigungsplatte eine Sicherungseinheit vorgesehen, an welcher die Sicherungselemente, wie zum Beispiel die Überstromsicherungen, angeordnet werden können. Auf der gegenüberliegenden Seite der Befestigungsplatte ist darüber hinaus ein Anschlusselement vorgesehen, mittels welchem ein externer Hochvolt-Gleichspannungsverbraucher angeschlossen und somit mit elektrischer Energie versorgt werden kann. Hierbei ist die erfindungsgemäße Anschlussvorrichtung insbesondere derart ausgestaltet, dass die an der Befestigungsplatte angeordnete Sicherungseinheit mit den Schutzelementen in das Gehäuse hineinragt, wenn die Anschlussvorrichtung an dem Gehäuse befestigt ist. Das auf der gegenüberliegenden Seite der Befestigungsplatte angeordnete Anschlusselement weist somit vom Gehäuse weg und ermöglicht daher einen einfachen Anschluss eines externen Verbrauchers. Die Anschlussvorrichtung kann hierbei insbesondere als ein kompaktes Bauteil realisiert werden, welches die genannten Elemente, insbesondere die Befestigungsplatte, das Anschlusselement und die Sicherungseinheit umfasst. Beispielweise kann die Anschlussvorrichtung als Spritzgussteil oder ähnliches realisiert werden.

Da die Sicherungseinheit mit den elektrischen Schutzelementen in das Gehäuse hineinragt, wenn die Anschlussvorrichtung an dem Gehäuse befestigt ist, sind die elektrischen Schutzelemente in diesem Zustand auch vor Berührungen und Beschädigungen geschützt. Insbesondere können die elektrischen Schutzelemente auf diese Weise sehr einfach in ein bestehendes und gegebenenfalls ohnehin erforderliches Gehäuse integriert werden.

Durch das Lösen der Befestigungsplatte von dem Gehäuse kann die Anschlussvorrichtung mit den elektrischen Schutzelementen sehr einfach abgenommen werden. Daraufhin sind die elektrischen Schutzelemente sehr einfach zugänglich und können beispielsweise überprüft oder ausgetauscht werden. Hierbei ist es besonders vorteilhaft, dass durch das Lösen der Befestigungsplatte die Anschlussvorrichtung mit den Schutzelementen vollständig entnommen werden kann, da somit auch gleichzeitig die elektrische Verbindung zu einer sich innerhalb des Gehäuses befindlichen elektrischen Spannungsversorgung getrennt wird. Auf diese Weise kann sichergestellt werden, dass sowohl die elektrischen Schutzelemente als auch ein gegebenenfalls noch angeschlossener elektrischer Verbraucher sicher und zuverlässig von der Spannungsversorgung getrennt sind.

Auf diese Weise ist eine besonders sichere und gleichzeitig einfache Wartung möglich, wobei beispielsweise die elektrischen Schutzelemente überprüft und gegebenenfalls ausgetauscht werden können.

Gemäß einer Ausführungsform ist die Sicherungseinheit dazu ausgelegt, für die beiden Anschlüsse des Gleichspannungsanschlusses, also für einen positiven und einen negativen Anschluss des Anschlusselements, jeweils ein elektrisches Schutzelement aufzunehmen. Wie oben bereits angeführt, kann es sich bei den elektrischen Schutzelementen beispielsweise um Überstromsicherungen, wie zum Beispiel Schmelzsicherungen oder ähnliches handeln. Wird sowohl für den positiven als auch den negativen Anschluss eine solche Schutzvorrichtung vorgesehen, so kann auch bei Isolationsfehlern und somit gegebenenfalls hohen auftretenden Leckströmen ein sicherer Schutz gewährleistet werden.

Gemäß einer Ausführungsform ist das elektrische Schutzelement oder sind gegebenenfalls die beiden elektrischen Schutzelemente mit der Sicherungseinheit verschraubbar. Selbstverständlich sind auch beliebige andere Möglichkeiten zur elektrischen und mechanischen Kontaktierung der Schutzelemente mit der Sicherungseinheit möglich. Schraubverbindungen ermöglichen jedoch eine sichere elektrische und gleichzeitig mechanische Verbindung.

Gemäß einer Ausführungsform umfasst die Anschlussvorrichtung, insbesondere die Sicherungseinheit, ein Halteelement. Das Halteelement kann dazu ausgelegt sein, das mindestens eine elektrische Schutzelement aufzunehmen. Beispielsweise kann das Halteelement aus einem nicht elektrisch leitfähigen Material, beispielsweise einem Kunststoff oder ähnlichem bestehen. Das Halteelement kann beispielsweise mechanische Strukturen aufweisen, welche dazu geeignet sind, das entsprechende Schutzelement aufzunehmen und gegebenenfalls eine ausreichende mechanische Führung oder Stabilität bereitzustellen.

Gemäß einer Ausführungsform ist die Befestigungsplatte dazu ausgelegt, mit dem Gehäuse mechanisch gekoppelt zu werden. Beispielsweise kann die Befestigungsplatte mit dem Gehäuse verschraubt werden. Hierzu kann die Befestigungsplatte beispielsweise mehrere Öffnungen aufweisen, welche dazu geeignet sind, die Befestigungsplatte an das Gehäuse anzuschrauben. Darüber hinaus sind auch beliebige andere Befestigungsmöglichkeiten, wie zum Beispiel Klemmvorrichtungen oder ähnliches möglich.

Gemäß einer Ausführungsform der Energieversorgungseinrichtung kann das Kontaktelement der Energieversorgungseinrichtung ein Federelement umfassen. Das Federelement kann insbesondere elektrisch mit der internen Gleichspannungsversorgung verbunden sein. Ferner kann das Federelement dazu ausgelegt sein, eine Federkraft auf einen Anschluss der Sicherungseinheit oder auf einen Anschluss eines Sicherungselementes auszuüben. Insbesondere kann sowohl für den positiven als auch für den negativen Anschluss der internen Gleichspannungsversorgung ein separates Federelement vorgesehen sein, welches jeweils mittels einer geeigneten Federkraft eine Kontaktierung mit der Sicherungseinheit bzw. den Sicherungselementen ermöglicht. Beispielsweise kann hierzu in dem Kontaktelement sowohl für den positiven als auch den negativen Anschluss jeweils eine Spiralfeder oder ähnliches vorgesehen sein, welche eine Federkraft in Richtung korrespondierender Anschlüsse an der Sicherungseinheit ausübt.

Gemäß einer Ausführungsform umfasst die interne Gleichspannungsversorgung eine Sammelschienen-Verbindung (Busbar). Derartige Sammelschienen-Verbindungen sind dazu geeignet auch große elektrische Ströme zuverlässig und mit geringer Verlustleistung zu übertragen.

Gemäß einer Ausführungsform kann die interne Gleichspannungsversorgung dazu ausgelegt sein, mit einem elektrischen Antriebssystem verbunden zu werden. Auf diese Weise kann eine elektrische Energieversorgung für ein solches elektrisches Antriebssystem mittels der Energieversorgungseinrichtung auch zusätzlich noch einen oder mehrere weitere externe elektrische Gleichspannungsverbraucher speisen.

Die obigen Ausgestaltungen und Weiterbildungen lassen sich, soweit sinnvoll, beliebig miteinander kombinieren. Insbesondere lässt sich die Signalverarbeitung auch auf mehr als eine dreistufige Einrichtung zur Signalverarbeitung erweitern. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Fig. 1:: eine schematische Darstellung einer Anschlussvorrichtung gemäß einer Ausführungsform;
- Fig. 2:: eine schematische Darstellung einer Energieversorgungseinrichtung mit einer Anschlussvorrichtung gemäß einer Ausführungsform; und
- Fig. 3:: eine schematische Darstellung für den Einbau einer Anschlussvorrichtung in eine Energieversorgungseinrichtung gemäß einer Ausführungsform.

### Beschreibung von Ausführungsformen

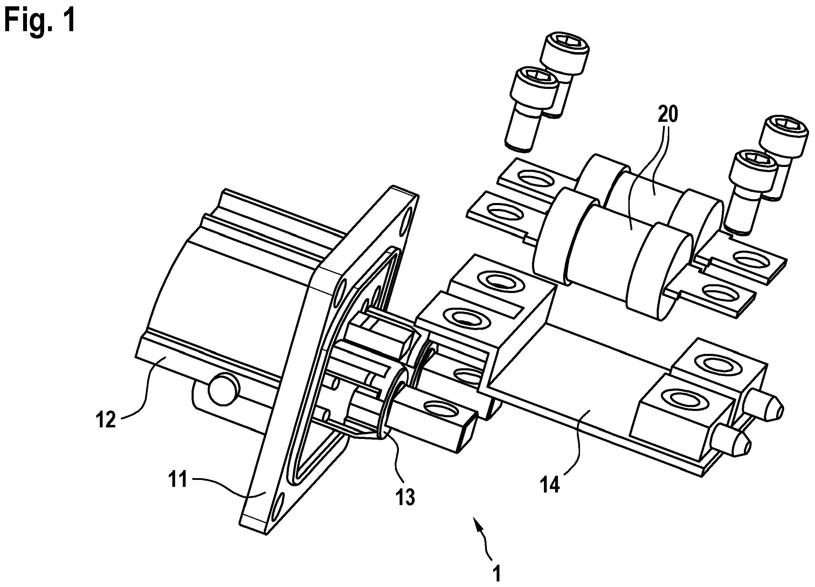

Figur 1 zeigt eine schematische Darstellung einer Anschlussvorrichtung 1 für einen Hochvolt-Gleichspannungsverbraucher gemäß einer Ausführungsform. Die Anschlussvorrichtung 1 umfasst eine Befestigungsplatte 11. Auf einer Seite der Befestigungsplatte 11 ist ein Anschlusselement 12 angeordnet. Bei diesem Anschlusselement 12 kann es sich beispielsweise um einen Stecker oder eine Buchse handeln, an welcher ein Verbraucher, insbesondere ein Hochvolt-Gleichspannungsverbraucher angeschlossen werden kann. Hierzu sind grundsätzlich beliebige Lösungen für den Anschluss eines solchen Verbrauchers möglich. Bei den an die Anschlussvorrichtung anschließbaren Hochvolt-Gleichspannungsverbrauchern kann es sich beispielsweise um elektrische handeln, welche eine elektrische Spannung von 48 Volt oder mehr, insbesondere von mehreren Hundert Volt benötigen. Insbesondere können die Hochvolt-Gleichspannungsverbraucher an ein Hochvolt-Bordnetz eines Elektrofahrzeugs anschließbar sein.

Auf der gegenüberliegenden Seite der Befestigungsplatte 11 ist eine Sicherungseinheit 13 vorgesehen. Diese Sicherungseinheit 13 dient zur Aufnahme möglicher elektrischer Schutzelemente 20, wie zum Beispiel Überstromsicherungen. Hierbei kann es sich zum Beispiel um geeignete Schmelzsicherungen oder ähnliches handeln. Die elektrischen Schutzelemente 20 können zum Beispiel mittels geeignete Schraubverbindungen mit der Sicherungseinheit 13 elektrisch und mechanisch verbunden werden. Insbesondere kann für eine Gleichstromverbindung sowohl für den positiven als auch für den negativen Anschluss jeweils ein elektrisches Schutzelement 20 vorgesehen sein.

Die Anschlussvorrichtung 1 mit der Befestigungsplatte 11, dem Anschlusselement 12 und der Sicherungseinheit 13 kann zum Beispiel als ein kompaktes Bauteil realisiert werden. Beispielsweise kann die Anschlussvorrichtung 1 in einem Spritzgussverfahren als Spritzgussteil hergestellt werden.

Darüber hinaus kann an der Sicherungseinheit 13 optional ein Halteelement 14 vorgesehen sein. Dieses Halteelement 14 kann beispielsweise eine mechanische Aufnahme der elektrischen Schutzelemente 20 ermöglichen. Hierzu können in dem Halteelement 14 zum Beispiel geeignete mechanische Strukturen vorgesehen sein, welche zu einer äußeren Form oder Abmessung der elektrischen Schutzelemente 20 korrespondieren. Das Halteelement 14 kann beispielsweise aus einem elektrisch nicht leitenden Material, wie zum Beispiel einem Kunststoff oder ähnlichem bestehen. Selbstverständlich kann das Halteelement 14 zum Anschluss und zur elektrischen Kontaktierung der jeweiligen Anschlüsse der elektrischen Schutzelemente 20 auch geeignete elektrisch leitfähige Kontaktelemente aufweisen.

Ist in der Anschlussvorrichtung 1 ein oben beschriebenes Halteelement 14 vorgesehen, so können die elektrischen Schutzelemente 20 auch mit den entsprechenden Anschlüssen des Halteelements 14 elektrisch und mechanisch verbunden werden. Hierzu können geeignete Schraubverbindungen vorgesehen sein. Darüber hinaus sind jedoch auch beliebige andere geeignete Verbindungs- bzw. Kontaktmöglichkeiten denkbar. Zum Beispiel können die elektrischen Schutzelemente 20 auch mittels Klemm- oder Federelementen elektrisch kontaktiert und mechanisch fixiert werden.

Auf diese Weise umfasst die Anschlussvorrichtung 1 sowohl Komponenten zum elektrischen Anschluss eines Hochvolt-Gleichspannungsverbrauchers und beinhaltet darüber hinaus gleichzeitig die erforderlichen elektrischen Schutzelemente 20. Insbesondere kann die Anschlussvorrichtung 1 mittels der Befestigungsplatte 11 an einem nachfolgend noch näher beschriebenen Gehäuse befestigt werden. Dabei wird der Teil der Anschlussvorrichtung 1 mit dem Sicherungselement 13 und den daran befestigten elektrischen Schutzelementen 20 in dieses Gehäuse eingeführt. Somit sind die elektrischen Schutzelemente 20 in dieses Gehäuse integriert und gleichzeitig vor Berührungen und externen Beschädigungen geschützt.

Zu Wartungs- oder Servicezwecken kann die Befestigungsplatte 11 von diesem Gehäuse gelöst werden. Anschließend kann die Anschlussvorrichtung 1 entnommen werden, sodass die Schutzelemente 20 frei zugänglich sind. Somit können die Schutzelemente 20 durch einen Benutzer einfach überprüft und bei Bedarf ausgetauscht werden.

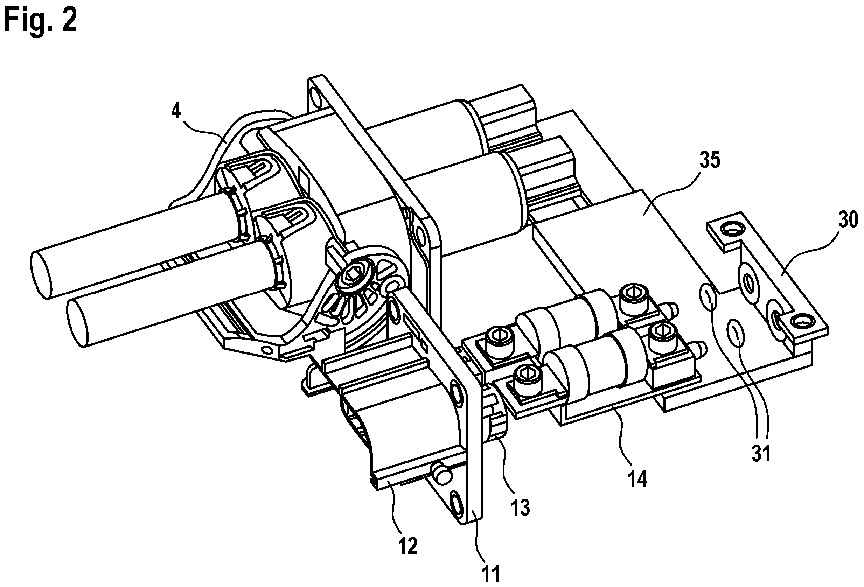

Figur 2 zeigt eine schematische Darstellung einer Energieversorgungseinrichtung mit einer Anschlussvorrichtung 1 für einen Hochvolt-Gleichspannungsverbraucher. Beispielsweise kann es sich bei der Anschlussvorrichtung 1 um die zuvor beschriebene Anschlussvorrichtung 1 handeln. Daher gelten insbesondere auch die zuvor beschriebenen Ausführungen für die Anschlussvorrichtung 1 der hier beschriebenen Energieversorgungseinrichtung.

Die Energieversorgungseinrichtung in Figur 2 kann zum Beispiel von einer Gleichspannungsquelle, wie zum Beispiel einer Traktionsbatterie eines Elektrofahrzeugs gespeist werden. Hierzu kann die externe Gleichspannungsquelle mittels eines Gleichspannungsanschlusses 4 mit der Energieversorgungseinrichtung elektrisch gekoppelt werden. Innerhalb der Energieversorgungseinrichtung kann mittels einer internen Gleichspannungsversorgung 35 die bereitgestellte Gleichspannung an die Anschlussvorrichtung 1, insbesondere an die Anschlüsse der elektrischen Schutzelemente 20 übertragen werden. Beispielsweise kann innerhalb der Gleichspannungsversorgung 35 die elektrische Energie mittels Sammelschienen (Busbar) oder ähnlichem übertragen werden.

Die von der internen Gleichspannungsversorgung 35 bereitgestellte Gleichspannung kann zum Beispiel mittels eines geeigneten Kontaktelemente 30 an den Anschlüssen der elektrischen Schutzelemente 20 bereitgestellt werden. Hierzu kann an dem Kontaktelement 30 beispielsweise für den positiven und den negativen Anschluss der Gleichspannung jeweils ein entsprechender Anschluss vorgesehen sein. Insbesondere kann jeder der beiden Anschlüsse des Kontaktelements 30 ein Federelement 31 oder ähnliches umfassen. Wird die Anschlussvorrichtung 1 mit den elektrischen Schutzelementen 20 in die Energieversorgungseinrichtung eingeführt, so drücken dabei jeweils die entsprechenden Anschlüsse der elektrischen Schutzelemente 20 bzw. die Kontakte an dem Halteelement 14 gegen die Federelemente 31. Auf diese Weise kann eine sichere und zuverlässige elektrische Kontaktierung erfolgen.

Wird zu Wartungs- oder Servicezwecken die Anschlussvorrichtung 1 aus der Energieversorgungseinrichtung entfernt, so werden damit automatisch auch die elektrischen Verbindungen zu der internen Gleichspannungsversorgung 35 unterbrochen. Somit ist die Anschlussvorrichtung 1 während der Wartung spannungsfrei. Folglich können die Schutzelemente 20 einfach überprüft und ausgetauscht werden, ohne dass zusätzliche Schalt- oder Verriegelungselemente erforderlich sind.

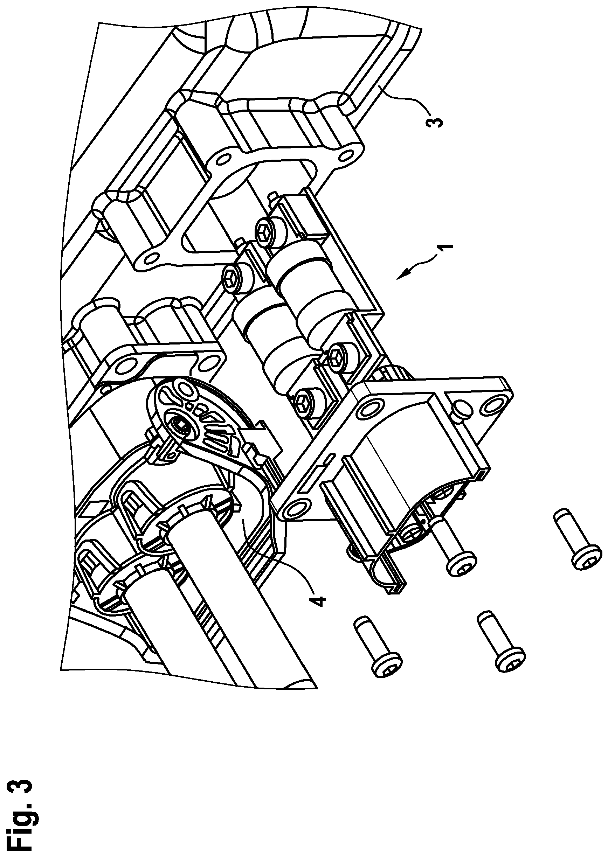

Figur 3 zeigt eine schematische Darstellung zur Veranschaulichung des Ein- bzw. des Ausbaus einer Anschlussvorrichtung 1 in eine Energieversorgungseinrichtung gemäß einer Ausführungsform. Dabei kann es sich beispielsweise um die zuvor beschriebene Energieversorgungseinrichtung bzw. die zuvor beschriebene Anschlussvorrichtung 1 handeln.

Wie in Figur 3 zu erkennen ist, kann die Anschlussvorrichtung 1 derart in ein Gehäuse 3 eingeführt werden, dass die an der Befestigungsplatte 11 angebrachte Sicherungseinheit 13 mit den elektrischen Schutzelementen 20 sich in eingebautem Zustand innerhalb des Gehäuses 3 befindet. Wie zuvor bereits beschrieben, können im eingebauten Zustand die elektrischen Kontakte der Schutzelemente 20 bzw. des Halteelements 14 die entsprechenden Anschlüsse des Kontaktelements 30 kontaktieren und auf diese Weise eine elektrische Verbindung herstellen.

Die Befestigungsplatte 11 der Anschlussvorrichtung 1 kann dabei beispielsweise mittels einer Schraubverbindung oder ähnlichem an dem Gehäuse 3 befestigt werden. Selbstverständlich sind auch andere geeignete Möglichkeiten zur Befestigung der Anschlussvorrichtung 1, insbesondere der Befestigungsplatte 11 an dem Gehäuse 3 möglich.

In eingebautem Zustand weist somit das Anschlusselement 12 der Anschlussvorrichtung 1 von dem Gehäuse weg. Somit können externe Hochvolt-Gleichspannungsverbraucher mittels geeigneter Anschlüsse, die zu dem Anschlusselement 12 korrespondieren, angeschlossen werden.

Für Wartungs- oder Servicezwecke kann die Befestigung der Befestigungsplatte 11 von dem Gehäuse 3 gelöst werden und die Anschlussvorrichtung 1 kann daraufhin entnommen werden. Somit wird die elektrische Verbindung zwischen den elektrischen Schutzelementen 20 und der Gleichspannungsversorgung 35 innerhalb des Gehäuses 3 unterbrochen. Entsprechend können die Schutzelemente 20 gefahrenlos überprüft und ausgetauscht werden.

Die zuvor beschriebene Energieversorgungseinrichtung kann beispielsweise an einem elektrischen Antriebssystem eines Elektrofahrzeugs eingesetzt werden. Beispielsweise kann die interne Gleichspannungsversorgung 35 mit einem elektrischen Antriebssystem verbunden werden und somit dieses elektrische Antriebssystem mit elektrischer Energie versorgen. Darüber hinaus kann mittels der beschriebenen Anschlussvorrichtung gegebenenfalls zusätzlich ein oder mehrere elektrische Hochvolt-Gleichspannungsverbraucher angeschlossen werden. Die Energieversorgungseinrichtung mit der beschriebenen Anschlussvorrichtung 1 ermöglicht dabei den Anschluss der externen Hochvolt-Gleichspannungsverbraucher über entsprechende elektrische Schutzelemente 20, ohne dass für diese Schutzelemente 20 eine zusätzliche, externe Sicherungsbox oder ähnliches vorgesehen werden muss.

Insbesondere kann das Gehäuse 3 der beschriebenen Energieversorgungseinrichtung an einer integrierten elektrischen Antriebsachse angebracht werden. Solche integrierten elektrischen Antriebsachsen sind beispielsweise unter dem Begriff "E-Achse" oder "eAxle" bekannt.

Zusammenfasst betrifft die vorliegende Erfindung ein Anschlusselement für Hochvolt-Gleichspannungsverbraucher sowie eine Energieversorgungseinrichtung für externe Hochvolt-Gleichspannungsverbraucher. Dabei sind in der Anschlussvorrichtung für den Verbraucher ein oder mehrere elektrische Schutzelemente integriert. Insbesondere sind die Schutzelemente derart in der Anschlussvorrichtung integriert, dass die Schutzelemente innerhalb eines bereits vorhandenen Gehäuses angeordnet sind. Hierdurch kann ein zusätzliches, separates Gehäuse für derartige Schutzelemente entfallen.

## Patentansprüche

1. Elektrische Antriebsachse, mit einem in die Antriebsachse integrierten elektrischen Antriebssystem und einer Energieversorgungseinrichtung, welche folgendes aufweist: ein Gehäuse (3), das an der Antriebsachse angeordnet ist, eine interne Gleichspannungsversorgung (35), die dazu ausgelegt ist, innerhalb des Gehäuses (3) eine Hochvolt-Gleichspannung bereitzustellen, und eine Anschlussvorrichtung (1) für einen Hochvolt-Gleichspannungsverbraucher, welche folgendes aufweist: eine Befestigungsplatte (11) die dazu ausgelegt ist, die Anschlussvorrichtung (1) an dem Gehäuse (3) zu befestigen, ein Anschlusselement (12), das an einer ersten Seite der Befestigungsplatte (11) angeordnet ist und das dazu ausgelegt ist, mit dem Hochvolt-Gleichspannungsverbraucher gekoppelt zu werden, und eine Sicherungseinheit (13), die mit einer zweiten Seite der Befestigungsplatte (11) verbunden ist, und die dazu ausgelegt ist, mindestens ein elektrisches Schutzelement (20) aufzunehmen, wobei die Sicherungseinheit (13) in einem Innenraum des Gehäuses (3) angeordnet ist, wenn die Anschlussvorrichtung (1) an dem Gehäuse (3) befestigt ist; wobei die Energieversorgungseinrichtung ferner ein Kontaktelement (30) aufweist, das dazu ausgelegt ist, die interne Gleichspannungsversorgung mit der Sicherungseinheit (11) elektrisch zu koppeln.

2. Elektrische Antriebsachse nach Anspruch 1, wobei die Sicherungseinheit (13) dazu ausgelegt ist, für einen positiven und einen negativen Anschuss des Anschlusselements (12) jeweils ein elektrisches Schutzelement (20) aufzunehmen.

3. Elektrische Antriebsachse nach Anspruch 1 oder 2, wobei das mindestens eine elektrischen Schutzelemente (20) mit der Sicherungseinheit (13) verschraubbar ist.

4. Elektrische Antriebsachse nach einem der Ansprüche 1 bis 3, mit einem Halteelement (14), das dazu ausgelegt ist, das mindestens eine elektrischen Schutzelement (20) aufzunehmen.

5. Elektrische Antriebsachse nach einem der Ansprüche 1 bis 4, wobei die Befestigungsplatte (11) dazu ausgelegt ist, mit dem Gehäuse (3) verschraubt zu werden.

6. Elektrische Antriebsachse nach einem der vorangehenden Ansprüche, wobei das Kontaktelement (30) ein Federelement (31) umfasst, das elektrisch mit der internen Gleichspannungsversorgung (35) verbunden ist, und das dazu ausgelegt ist, eine Federkraft auf einen Anschluss der Sicherungseinheit (13) oder des mindestens einen Sicherungselements (20) auszuüben.

7. Elektrische Antriebsachse nach einem der vorangehenden Ansprüche,, wobei die interne Gleichspannungsversorgung (35) eine Sammelschienen-Verbindung umfasst.

8. Elektrische Antriebsachse nach einem der vorangehenden Ansprüche,, wobei die interne Gleichspannungsversorgung (35) dazu ausgelegt ist, mit einem elektrischen Antriebssystem (2) verbunden zu werden.

## Claims

1. Electric drive axle with an electric drive system integrated in the drive axle and an energy supply device, having the following: a housing (3) arranged on the drive axle, an internal DC power supply (35) designed to provide a high-voltage DC power within the housing (3), and a connection device (1) for a high-voltage DC load, having the following: a fastening plate (11) designed to fasten the connection device (1) to the housing (3), a connection element (12) arranged on a first side of the fastening plate (11) and designed to be coupled to the high-voltage DC load, and a safety unit (13) connected to a second side of the fastening plate (11) and designed to accommodate at least one electrical protective element (20), wherein the safety unit (13) is arranged in an interior of the housing (3) when the connection device (1) is fastened to the housing (3); wherein the energy supply device further has a contact element (30) designed to electrically couple the internal DC power supply to the safety unit (11).

2. Electric drive axle according to Claim 1, wherein the safety unit (13) is designed to accommodate an electrical protective element (20) for both a positive and a negative connection of the connection element (12).

3. Electric drive axle according to Claim 1 or 2, wherein the at least one electrical protective element (20) is able to be screwed to the safety unit (13).

4. Electric drive axle according to one of Claims 1 to 3, with a holding element (14) designed to accommodate the at least one electrical protective element (20).

5. Electric drive axle according to one of Claims 1 to 4, wherein the fastening plate (11) is designed to be screwed to the housing (3).

6. Electric drive axle according to one of the preceding claims, wherein the contact element (30) comprises a spring element (31) which is electrically connected to the internal DC power supply (35) and is designed to exert a spring force on a connection of the safety unit (13) or of the at least one safety element (20).

7. Electric drive axle according to one of the preceding claims, wherein the internal DC power supply (35) comprises a busbar connection.

8. Electric drive axle according to one of the preceding claims, wherein the internal DC power supply (35) is designed to be connected to an electric drive system (2).

## Revendications

1. Essieu moteur électrique, comprenant un système d'entraînement électrique intégré dans l'essieu moteur et un dispositif d'alimentation en énergie, lequel possède les éléments suivants : un boîtier (3), qui est disposé sur l'essieu moteur, une alimentation interne en tension continue (35), qui est conçue pour fournir une tension continue haute tension à l'intérieur du boîtier (3), et un dispositif de raccordement (1) pour un consommateur de tension continue haute tension, lequel possède les éléments suivants : une plaque de fixation (11), qui est conçue pour fixer le dispositif de raccordement (1) au boîtier (3), un élément de raccordement (12), qui est disposé sur un premier côté de la plaque de fixation (11) et est conçu pour être couplé au consommateur de tension continue haute tension, et une unité de sécurité (13), qui est reliée à un deuxième côté de la plaque de fixation (11) et qui est conçue pour recevoir au moins un élément de protection électrique (20), l'unité de sécurité (13) étant disposée dans un espace intérieur du boîtier (3) lorsque le dispositif de raccordement (1) est fixé au boîtier (3) ; le dispositif d'alimentation en énergie possédant en outre un élément de contact (30), qui est conçu pour coupler électriquement l'alimentation interne en tension continue à l'unité de sécurité (11).

2. Essieu moteur électrique selon la revendication 1, l'unité de sécurité (13) étant conçue pour recevoir respectivement un élément de protection électrique (20) pour un raccordement positif et un raccordement négatif de l'élément de raccordement (12).

3. Essieu moteur électrique selon la revendication 1 ou 2, l'au moins un élément de protection électrique (20) pouvant être vissé à l'unité de sécurité (13).

4. Essieu moteur électrique selon l'une des revendications 1 à 3, comprenant un élément de retenue (14), qui est conçu pour recevoir l'au moins un élément de protection électrique (20).

5. Essieu moteur électrique selon l'une des revendications 1 à 4, la plaque de fixation (11) étant conçue pour être vissée au boîtier (3).

6. Essieu moteur électrique selon l'une des revendications précédentes, l'élément de contact (30) comportant un élément ressort (31), qui est relié électriquement à l'alimentation interne en tension continue (35) et qui est conçu pour exercer une force de ressort sur une borne de l'unité de sécurité (13) ou de l'au moins un élément de sécurité (20).

7. Essieu moteur électrique selon l'une des revendications précédentes, l'alimentation interne en tension continue (35) comprenant une connexion à barre omnibus.

8. Essieu moteur électrique selon l'une des revendications précédentes, l'alimentation interne en tension continue (35) étant conçue pour être reliée à un système d'entraînement électrique (2).
